# EUROPEAN PATENT APPLICATION

(11) **EP 4 763 485 A1**
(43) Date of publication of application: **24.06.2026**
(21) Application number: 25223252.5
(22) Date of filing: 15.12.2025
(51) Int. Cl.: B29C 65/18, B29C 65/74, B31B 70/81, B65B 61/18, B65D 33/25

(54) **HEAT SEAL ASSEMBLY WITH PERFORATING TEETH FOR MONO-MATERIAL ENCLOSURE AND METHOD FOR SEALING THE MONO-MATERIAL ENCLOSURE**

(30) Priority: 17.12.2024 US 202463735203 P; 21.11.2025 US 202519397561
(71) Applicant: Illinois Tool Works Inc., Glenview IL 60025 (US)
(72) Inventor: PLOURDE, Eric P., Glenview, 60025 (US)
(74) Representative: HGF

(57) **Abstract**

A method and heat sealing assembly for creating a resealable enclosure (100) from a mono-material film (102) and a zipper assembly (104). The method involves positioning facing portions of the mono-material film (102) and the zipper assembly (104) between seal bodies (302, 304) having a heated sealing land (510) and a perforation land (512) with perforating teeth (308), heat sealing the facing portions to flanges (126) of the zipper assembly (104) with the heated sealing land (510), and simultaneously perforating the facing portions on a consumer side (114) with the perforating teeth (308) to form lines of weakness (118, 800). The lines of weakness (118, 800) allow a consumer to tear off the top and create an open edge (200, 900) of the resealable enclosure (100). A thermally insulative barrier (500) thermally isolates the perforation land (512) from a heated portion (504) of the seal body (302, 304) to prevent fusion along the lines of weakness (118, 800), while hermetic heat seals are formed in areas outside the perforation lane to join the mono-material film (102) to the zipper flanges (126). The zipper assembly (104) includes opposing zipper profiles (106) that repeatedly mate and separate to seal and open the enclosure (100). The perforating teeth (308) can cut entirely through or partially through the mono-material film (102) and may be arranged on opposing seal bodies (302, 304) to create offset lines of weakness (118, 800).

## Description

### CROSS-REFERENCE TO RELATED APPLICATIONS

This application claims priority to U.S. Patent Application No. 19/397,561 (filed 21-November-2025), which claims priority to U.S. Provisional Application No. 63/735,203 (filed 17-December-2024), the entire disclosures of which are incorporated herein by reference.

### BACKGROUND

### Technical Field.

The subject matter described herein relates to flexible packaging technologies, specifically to heat sealing assemblies for sealing film(s) of an enclosure with a zipper assembly of the enclosure.

### Discussion of Art.

Flexible enclosures, such as bags and pouches, have been transitioning from multi-layer, multi-material film structures to mono-material film structures. These new film structures typically use a single type of material, such as polyethylene or polypropylene, to facilitate recycling. Unlike laminate film structures, which incorporate several different incompatible materials into different film layers, mono-material film structures can be recycled without contaminating the recycled material with incompatible materials, thus providing more sustainable options for flexible packaging.

Mono-material films, however, tend to be tough, stretchy, and have high tensile strength. These properties make mono-material enclosures difficult to open without the use of scissors or knives. While laminate films can be easily torn or laser scored to create an easy-open feature, mono-material films typically do not work well with laser scoring. Lines of perforations can serve as easy-open features for mono-material films, but incorporating these perforations correctly can be problematic and require additional processing steps. Open perforations also allow the transmission of gases and liquids into and out of the package, and may lead to pest infestation.

### BRIEF SUMMARY

In one example, a method includes positioning facing portions of a mono-material film and a zipper assembly between the facing portions between seal bars having perforating teeth, heat sealing the facing portions of the mono-material film to the zipper assembly therebetween, and (during the heat sealing of the facing portions) simultaneously perforating the facing portions of the mono-material film with the perforating teeth of the seal bars. The perforating of the facing portions of the mono-material film cuts into the mono-material film and forms one or more lines of weakness having sequential perforations for a consumer to tear off a top of a resealable enclosure formed by the mono-material film and the zipper assembly.

The zipper assembly can include opposing zipper profiles configured to repeatedly mate and separate to repeatedly seal and open the resealable enclosure. The perforating of the facing portions of the mono-material film can cut into the mono-material film on a consumer side of the zipper profiles. The perforating of the facing portions of the mono-material film does not cut into the mono-material film on a product side of the zipper profiles in at least one example. The heat sealing of the facing portions of the mono-material film can occur in areas outside of the one or more lines of weakness formed by the perforating of the facing portions of the mono-material film with the areas thermally insulated from the heat sealing by the seal bars.

The perforating of the facing portions of the mono-material film can form first and second lines of the one or more lines of weakness that are offset from each other to create a height difference in top edges of the facing portions of the mono-material film in the resealable enclosure once consumer portions of the mono-material film above the first and second lines are removed. The perforating of the facing portions of the mono-material film can cut entirely through at least one of the facing portions of the mono-material film. Alternatively, the perforating of the facing portions of the mono-material film can cut into, but not entirely through, either of the facing portions of the mono-material film.

In another example, a heat sealing assembly for a resealable enclosure includes opposing bodies configured to receive facing portions of a mono-material film and a zipper assembly between the facing portions between the opposing bodies, and perforating teeth projecting from at least one of the opposing bodies. At least part of the opposing bodies is configured to conduct heat and heat seal the facing portions of the mono-material film to the zipper assembly therebetween while the perforating teeth simultaneously perforate the facing portions of the mono-material film to cut into the mono-material film and form one or more lines of weakness having sequential thru-slit perforations for a consumer to tear off a top of a resealable enclosure formed by the mono-material film and the zipper assembly.

The zipper assembly can include opposing zipper profiles configured to repeatedly mate and separate to repeatedly seal and open the resealable enclosure. The perforating teeth can be located on the at least one of the opposing bodies to cut into the mono-material film on a consumer side of the zipper profiles. The perforating teeth can be located on the at least one of the opposing bodies to not cut into the mono-material film on a product side of the zipper profiles.

The opposing bodies can include a thermally insulative barrier portion between the perforating teeth and remainders of the opposing bodies. The thermally insulative barrier portion can allow heat sealing of the facing portions of the mono-material film in areas outside of the one or more lines of weakness while preventing the heat sealing of the one or more lines of weakness to the zipper assembly.

The perforating teeth can project from both of the opposing bodies. Alternatively, only one of the opposing bodies may have the perforating teeth. The perforating teeth can project from the opposing bodies along offset patterns such that the perforating teeth form first and second lines of the one or more lines of weakness that are offset from each other. The perforating teeth can project along the offset patterns to create a height difference in top edges of the facing portions of the mono-material film in the resealable enclosure once consumer portions of the mono-material film above the first and second lines are removed.

The perforating teeth can project from the opposing bodies to cut entirely through at least one of the facing portions of the mono-material film. Alternatively, the perforating teeth can project from the opposing bodies to cut into, but not entirely through, either of the facing portions of the mono-material film.

In another example, a method comprises positioning facing portions of a mono-material film and a zipper assembly between the facing portions between seal bars having perforating teeth; heat sealing the facing portions of the mono-material film to the zipper assembly therebetween; and during the heat sealing of the facing portions, simultaneously perforating the facing portions of the mono-material film with the perforating teeth of the seal bars on a consumer side of the zipper assembly. The perforating of the facing portions of the mono-material film cuts into the mono-material film and forms one or more lines of weakness on the consumer side of the zipper for a consumer to tear off a top of a resealable enclosure formed by the mono-material film and the zipper assembly.

The perforating of the facing portions of the mono-material film does not cut into the mono-material film on a product side of the zipper assembly in one example. The heat sealing the facing portions of the mono-material film can occur in areas outside of the one or more lines of weakness formed by the perforating of the facing portions of the mono-material film with the areas thermally insulated from the heat sealing by the seal bars. The perforating of the facing portions of the mono-material film can form first and second lines of the one or more lines of weakness that are offset from each other to create a height difference in top edges of the facing portions of the mono-material film in the resealable enclosure once consumer portions of the mono-material film above the first and second lines are removed.

While one or more examples of the inventive subject matter described herein are used in connection with resealable enclosures having outer films or walls formed from a mono-material, not all examples of the inventive subject matter are limited to mono-materials unless explicitly limited in that way. For example, one or more examples of the heat sealing assemblies described herein may be used to seal multi-material films to zipper assemblies and to form lines of weaknesses in the multi-material films.

### BRIEF DESCRIPTION OF THE DRAWINGS

The inventive subject matter may be understood from reading the following description of non-limiting embodiments, with reference to the attached drawings, wherein below:
Figure 1 illustrates one example of a sealed resealable enclosure;
Figure 2 illustrates one example of the resealable enclosure shown in Figure 1 with an open upper edge or top;
Figure 3 illustrates one example of a heat sealing assembly;
Figure 4 illustrates one example of operation of the heat sealing assembly shown in Figure 3;
Figure 5 illustrates a cross-sectional view of one example of a seal body of the heat sealing assembly shown in Figures 3 and 4;
Figure 6 illustrates one example of the seal bodies of the heat sealing assembly shown in Figure 3 with aligned perforating teeth;
Figure 7 illustrates one example of the seal bodies of the heat sealing assembly shown in Figure 3 with offset perforating teeth;
Figure 8 illustrates another example of a sealed resealable enclosure with offset lines of weakness;
Figure 9 illustrates one example of the resealable enclosure shown in Figure 8 with an open upper edge or top; and
Figure 10 illustrates a flow chart of one example of a method for sealing a film of a resealable enclosure to a zipper assembly while forming one or more lines of weakness in the film.

### DETAILED DESCRIPTION

Flexible packaging, such as bags and pouches, has seen a significant shift towards the use of mono-material film structures in recent years. These mono-material films, typically made from polyethylene or polypropylene, offer a more sustainable option for packaging as they can be recycled without contaminating the recycling stream with incompatible materials. This shift addresses the growing demand for environmentally friendly packaging solutions that can be easily recycled.

A mono-material can refer to a packaging material composed entirely of a single type of polymer, such as polyethylene or polypropylene. Unlike traditional multilayered laminates that incorporate various incompatible materials, mono-material structures utilize a homogeneous composition. This uniformity facilitates recycling processes, as the material can be reintroduced into the recycling stream without the risk of contamination from other polymers.

Mono-material films exhibit high tensile strength and elasticity, making them durable and resistant to tearing. These properties, while beneficial for the integrity of the packaging, pose challenges for creating easy-open features. Traditional methods such as laser scoring, effective on multi-layer laminates, are less effective on mono-material films due to their toughness. Consequently, alternative methods, such as incorporating perforations or specialized seal bars with perforating teeth, are employed to facilitate easy opening while maintaining the package's structural integrity.

The transition to mono-material packaging is at least partially driven by the need to improve the recyclability of flexible packaging. Manufacturers can ensure that the packaging can be processed in existing recycling streams without causing contamination by using a single polymer type. This can reduce the complexity of recycling processes and increase the quality of recycled materials.

Mono-material films present several challenges compared to traditional laminate films. Laminate films tend to tear more easily and can be laser scored to create an easy-open feature (e.g., a line of weakness extending around the top or consumer side of an enclosure that can be easily ripped off or separated from the remainder of the enclosure along the line of weakness). Mono-material films tend to be tougher, stretch more (e.g., can be pulled farther without tearing), and have greater tensile strength, which can make enclosures formed from mono-material film more difficult to open without the use of cutting instruments such as scissors or knives. Additionally, laser scoring, which works well with laminate films, is not as effective (or is not effective at all) with mono-material films.

Existing solutions for incorporating easy-open features into mono-material films often involve additional processing steps, which can be inefficient and costly. Some seal bars or seal bar sets include separate perforating blades, but these are not able to be used with enclosures having reclosable zipper assemblies as the blades can cut into and/or around the zipper assemblies, thereby potentially exposing the products inside the enclosures to the surrounding atmosphere. For example, these open perforations can allow the transmission of gases and liquids into and out of the package, potentially compromising the integrity of the contents and increasing the risk of infestations.

The inventive subject matter disclosed herein addresses these challenges by providing a solution that integrates perforating teeth into the seal bars used for mono-material films for the simultaneous heat sealing of the mono-material films to zipper assemblies and forming of one or more lines of weakness into and/or through the films to provide an easy-open feature. For example, this approach allows for the simultaneous heat sealing and perforating of the film, creating lines of weakness that enable consumers to easily tear off the top of a resealable enclosure. The perforations can be strategically placed to maintain the integrity of the package while providing a user-friendly opening mechanism. The heat sealing assembly can include opposing heat seal bodies with perforating teeth that project from at least one of the bodies. The inventive subject matter can simplify the manufacturing process of mono-material enclosures by performing the heat sealing of the films to the zipper assemblies and the formation of the lines of weakness into a single manufacturing step. Additionally, the subject matter can make the packaging/enclosures more accessible and convenient for consumers.

Positioning the facing portions of a mono-material film and a zipper assembly between seal bars with perforating teeth allows for simultaneous heat sealing and perforation. This integration can reduce the number of processing steps required to increase manufacturing efficiency. The simultaneous perforation during heat sealing creates one or more lines of weakness in the mono-material film to provide for easy or easier tearing by the consumer. This inventive subject matter addresses the challenge of opening tough, stretchy mono-material films without the need for scissors or knives to improve convenience to consumers. Additionally, the use of mono-material films supports recycling efforts by providing packaging that can be processed in existing polyethylene recycling streams without contamination.

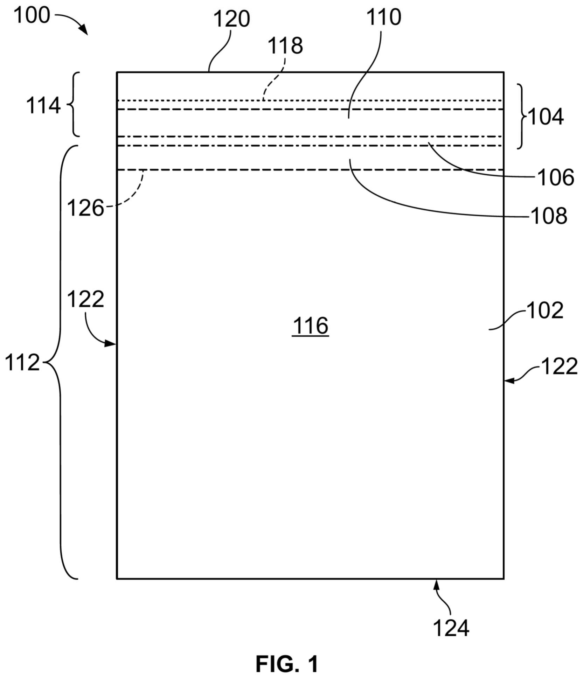

Figure 1 illustrates one example of a sealed resealable enclosure 100. The resealable enclosure 100 can be formed from one or more mono-material films 102 and a zipper assembly 104. The resealable enclosure 100 is a structure that can be repeatedly opened and closed using the zipper assembly 104. One or more mono-material films 102 form the primary material and exterior of the resealable enclosure 100. The mono-material film 102 is typically formed from a single type of material, such as polyethylene or polypropylene. Alternatively, the film(s) 102 can be formed from two or more materials. In one example, a single film 102 is used to form the enclosure 100. For example, a single film 102 may be folded to form a bend at a lower edge 124 of the enclosure 100. Lateral side edges 122 of the folded film 102 can then be sealed together and top or upper edges 120 of the folded film 102 also can be sealed together to form the enclosure 100. The side edges 122 can be the lateral boundaries of the resealable enclosure 100. Optionally, the enclosure 100 may be formed from multiple films 102, such as two films 102 facing each other and sealed together along the outer edges 120, 122, 124 of the films 102 to form the enclosure 100. The sealed upper edge 120 ensures that the resealable enclosure 100 remains closed until the consumer opens the resealable enclosure 100. The sealed upper edge 120 can provide a tamper-evident feature, indicating whether the enclosure 100 has been previously opened.

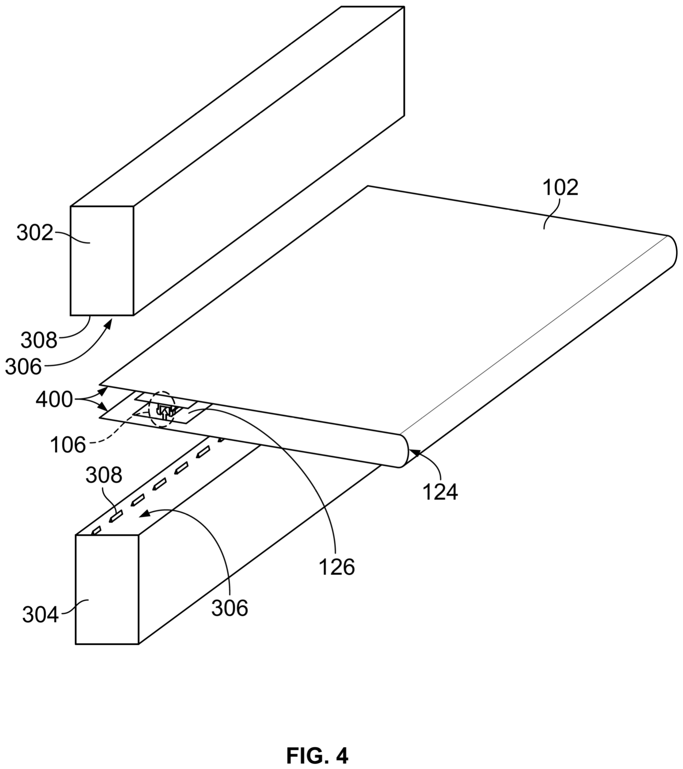

The zipper assembly 104 is included in the resealable enclosure 100 to provide a mechanism for repeated sealing and opening. The zipper assembly 104 includes zipper profiles 106 that mate and separate to enable the resealable function. The zipper assembly 104 is positioned between the facing portions or surfaces of the mono-material film 102 and is heat sealed to the mono-material film 102 during the manufacturing process. The zipper profiles 106 are the parts of the zipper assembly 104 that interlock to form a seal. The zipper profiles 106 are configured to repeatedly mate and separate, allowing the resealable enclosure 100 to be opened and closed multiple times. For example, the zipper profiles 106 can include complementary shaped bodies, such as a protuberance and a groove, which are coupled with different interior surfaces of the film 102 (labeled as 400 in Figure 4) to face each other. The zipper assembly 104 can include opposing flanges 126 that face each other and that are sealed to different interior surfaces of the film 102. Each of the flanges 126 can include at least one of the different profiles 106. For example, the flange 126 sealed to one interior film surface 400 can include at least one elongated protuberance as a profile 106 and the other flange 126 sealed to the opposite or opposing film surface 400 can include at least one elongated groove as a profile 106 that receives the protuberance to seal the zipper assembly 104.

Each of the flanges 126 can have a consumer side 110 of the flange 126 and a product side 108 of the flange 126. The consumer side 110 of the flange 126 is a part of the flange 126 that is between the profiles 106 and the top edge 120 of the enclosure 100. Consumers can access an interior volume 116 of the enclosure 100 via the consumer side 110s of the flanges 126. The interior volume 116 can be the space within the resealable enclosure 100 that holds the product. The interior volume 116 is defined or bounded by the mono-material film 102 and the closed zipper assembly 104.

The product sides 108 of the flanges 126 may be between the profiles 106 and the interior volume 116 of the enclosure 100 where product(s) is/are held in the enclosure 100. A product side 112 of the enclosure 100 includes the portion of the enclosure 100 that contains the product in the interior volume 116. The product side 112 of the enclosure 100 is opposite the consumer side 114 of the enclosure 100 and includes the product side 108 of the flanges 126 of the zipper assembly 104.

Similarly, a consumer side 114 of the enclosure 100 includes the portion of the resealable enclosure 100 that is accessed by the consumer and that is disposed between the profiles 106 and the top edge 120 of the enclosure 100. This consumer side 114 of the enclosure 100 includes the consumer side 110 of the flanges 126 and the portion of the film 102 where one or more lines of weakness 118 are formed. The consumer side 114 of the enclosure 100 is designed to facilitate easy opening by the consumer. For example, a consumer can tear the film 102 along the line of weakness 118 (which can extend across the front side of the enclosure 100 shown in Figure 1, as well as across the opposite back side of the enclosure 100) to remove a top part of the enclosure 100 between the top edge 120 and the line of weakness 118.

In the example shown in Figure 1, the line of weakness 118 is cut into and/or through the film 102 above the consumer side 110 of the flanges 126 of the zipper assembly 104. Alternatively, the line of weakness 118 can be cut into and/or through the film 102 above the profiles 106 but over the consumer side 110 of the flanges 126. For example, the line of weakness 118 can be cut into or through the film 102 between the profiles 106 and a top edge of the consumer side 110 of the flanges 126.

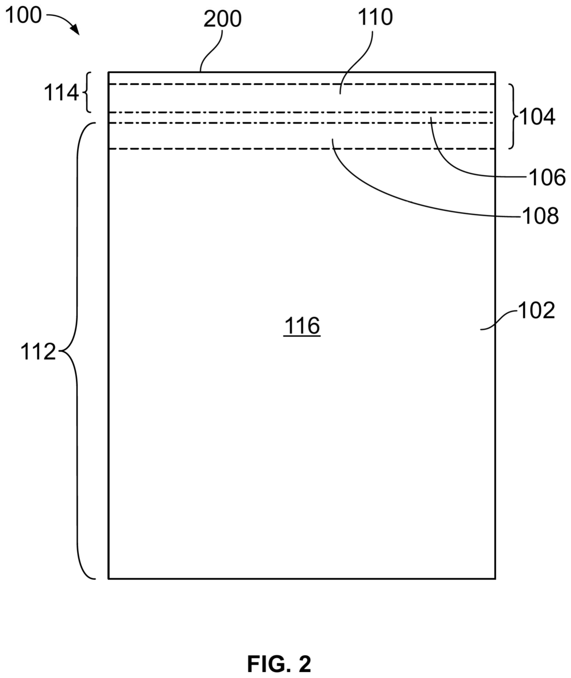

With continued reference to the top-sealed enclosure 100 shown in Figure 1, Figure 2 illustrates the same enclosure 100 with the top part of the enclosure 100 removed by tearing the film 102 along the line(s) of weakness 118. This creates an open upper or top edge 200 that the consumer can then access the previously inaccessible zipper assembly 104 to pull the flanges 126 and profiles 106 away and apart from each other to access the interior volume 116. The consumer can then press the profiles 106 toward each other to reseal the enclosure 100 using the zipper assembly 104. The open edge 200 optionally can be referred to as the open mouth of the enclosure 100. In the illustrated example, the line of weakness 118 extending across the front and rear panels or walls of the enclosure 100 are equidistant from the zipper assembly 104 and/or the sealed top edge 120 of the enclosure 100.

The line of weakness 118 can be formed in the mono-material film 102 using perforating teeth during the process of heat sealing the zipper assembly 104 to the interior surfaces 400 of the film 102, as described herein. The line(s) of weakness 118 can include a series (e.g., line) of sequential perforations that allow the consumer to tear off the top of the resealable enclosure 100, as described above. The line of weakness 118 can be positioned to ensure that the resealable function of the zipper assembly 104 is not compromised. For example, the line of weakness 118 can be formed above the profiles 106 and/or above the flanges 126 of the zipper assembly 104 (e.g., with the term above indicating closer to the top edge 120 than the interior volume 116) so that any openings into the enclosure 100 formed by the perforations forming the line of weakness 118 do not extend into or provide environmental access into the interior volume 116 (due to the zipper assembly 104 being closed).

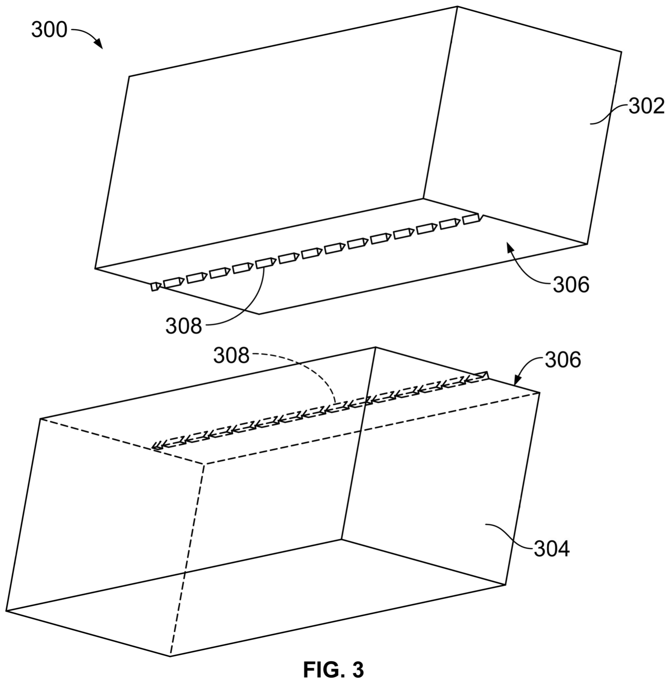

Figure 3 illustrates one example of a heat sealing assembly 300. Figure 4 illustrates one example of operation of the heat sealing assembly 300 shown in Figure 3. The heat sealing assembly 300 includes a first seal body 302 and a second seal body 304. The seal bodies 302, 304 optionally can be referred to as bars.

The seal bodies 302, 304 include engaging faces 306 that can directly contact the mono-material film 102 on exterior surfaces of the enclosure 100 with the zipper assembly 104 between the film 102. The zipper assembly 104 may not be coupled with the interior surfaces 400 of the film 102 prior to the seal bodies 302, 304 contacting the film 102. The seal bodies 302, 304 can be heated and the engaging faces 306 can be predominantly planar surfaces. The bodies 302, 304 are moved toward each other to sandwich the film 102 and zipper assembly 104 therebetween to apply uniform heat and pressure. This heat and pressure can heat seal the interior surfaces 400 of the film 102 to the flanges 126 of the zipper assembly 104. The engaging faces 306 can be heated to a specific temperature to provide the heat sealing process. The heat applied by the engaging faces 306 causes the mono-material film 102 to bond with the flanges 126 of the zipper assembly 104 to create a strong and durable seal.

One or both of the seal bodies 302, 304 can also include perforating teeth 308 that project from the engaging face(s) 306. The perforating teeth 308 can be specialized projections located on the engaging faces 306 of the seal bodies 302, 304. These teeth 308 can cut into (e.g., partially perforate) or through (e.g., fully perforate) the film 102 during the heat sealing process. The perforating teeth 308 can create one or more of the lines of weakness 118 in the film 102. The perforating teeth 308 can be arranged in various patterns and configurations to achieve the desired perforation characteristics. The height, shape, and spacing of the perforating teeth 308 can be adjusted based on the specific requirements of the film 102 and the zipper assembly 104. In the illustrated example, each tooth 308 is an elongated, sharpened blade that cuts an elongated slit into and/or through the film 102. The perforating teeth 308 can vary in shape, such as triangular, thin blades, or having rounded cutting edges, depending on the desired tearing properties of the mono-material film 102.

The perforating teeth 308 on one seal body 302 can create the line of weakness 118 on one panel or wall (e.g., the front) of the enclosure 100 while the teeth 308 on the other seal body 304 can create another line of weakness 118 on another panel or wall (e.g., the rear) of the enclosure 100. The bodies 302, 304 can both heat seal the film 102 to the zipper assembly 104 while simultaneously creating the lines of weakness 118 into the film 102.

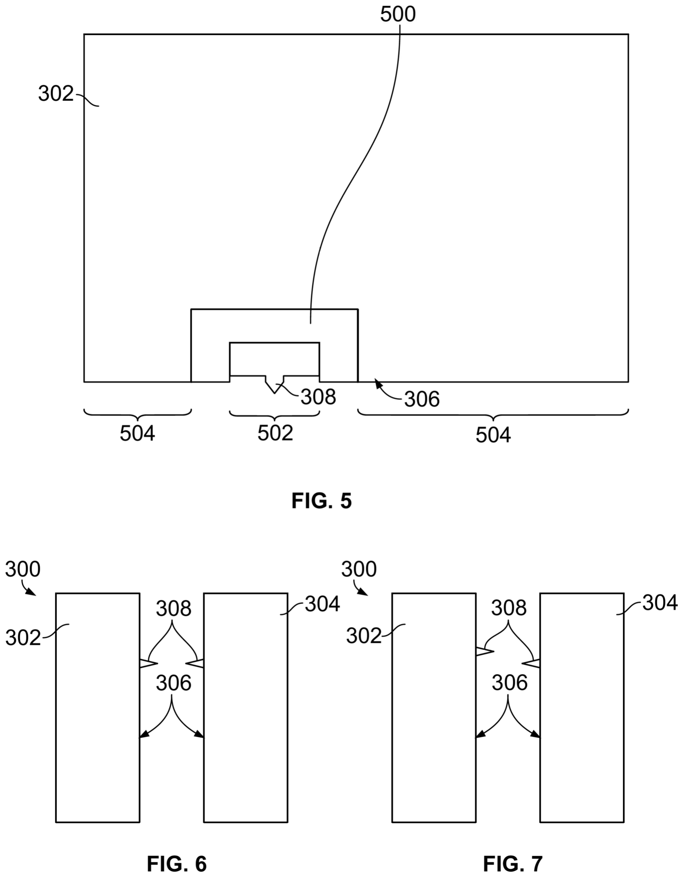

Figure 5 illustrates a cross-sectional view of one example of the seal body 302 shown in Figure 3. Optionally, the cross-sectional view in Figure 5 can represent the seal body 304 additionally or in the alternate to the body 302. The seal body 302 can include a thermally conductive material forming a heated portion 504 of the seal body 302. For example, the portion 504 of the seal body 302 can be formed of one or more metals or metal alloys that conduct heat through the body 302 to the film 102 to heat seal the film 102 to the zipper assembly 104.

The seal body 302 can include a thermally insulative barrier 500 that is integrated within the seal body 302 between the heated portion 504 that is outside of the insulative barrier 500 and a thermally insulated portion 502 of the seal body 302 that includes the teeth 308. The barrier 500 serves to thermally isolate the perforating teeth 308 in the insulated portion 502 from the heat conducted by the heated portion 504 of the seal bar 302. The barrier 500 can be made from materials with low thermal conductivity, such as ceramics or specialized polymers, or the barrier 500 can represent or include an air gap to provide the thermal insulation. Optionally, the thermally insulated portion 502 and/or the teeth 308 can be formed from materials that are less thermally conductive than the heated portion 504 so that the teeth 308 are not heated or are not heated to the same temperature as the remainder of the body 302 (e.g., not heated enough to heat seal the film 102 to the zipper assembly 104).

The teeth 308 can be thermally insulated from a remainder of the seal body 302 to ensure that the areas of the film 102 that are cut into and/or through to form the line(s) of weakness 118 are not also heat sealed to each other or to the zipper assembly 104. Otherwise, the perforations formed in the film 102 may be heat sealed closed, thereby preventing creation of a line of weakness 118 to assist consumers in opening the enclosure 100.

As shown in Figure 5, a portion of the engaging face 306 of the seal body 302 defines a heated sealing land that is thermally coupled to the heated portion 504 and configured to apply heat and pressure sufficient to heat seal the facing portions of the film 102 to the flanges 126 of the zipper assembly 104. This heated sealing land can include the surface area of the engaging face 306 that is formed from a thermally conductive material (e.g., a metal or metal alloy) for thermally conducting heat to heat seal the facing portions of the film 102 to the flanges 126. An adjacent portion of the engaging face 306 defines a perforation land that is thermally insulated from the heated portion 504 by the barrier 500 and that carries the perforating teeth 308. This perforation land includes the surface area of the engaging face 306 that is separated from the heated sealing land by the insulative barrier 500. The insulative barrier 500 can be a ceramic insert, a low-thermal-conductivity polymer insert, or an air gap, and may extend continuously outside of the perforation land and separate the perforation land from the heated sealing land to reduce heat flow into the perforation land (or, in one example, to prevent the perforation land from heating to a temperature that would heat seal the facing portions of the film 102 to each other). As shown, the heated portion 504 (e.g., the heated sealing land) can be directly adjacent to (and directly contact or abut) the insulative barrier 400, which can be directly adjacent to (and directly contact or abut) the thermally insulated portion 502 (e.g., the perforation land or strip).

In operation, the opposing seal bodies 302, 304 are closed in a single sealing stroke so that the heated sealing land concurrently forms heat seals that join the facing portions of the film 102 to the zipper flanges 126 while, in the same single sealing stroke, the perforating teeth 308 on the perforation land mechanically penetrate only the consumer-side regions of the facing portions of the film 102 to create at least one line of weakness. The line of weakness is formed by the discrete slit perforations generated by the penetration of the projecting perforating teeth 308 through the film 102, as opposed to heat scoring or embossing. The thermal insulation of the perforation land suppresses (or, in one example, eliminates) heat transfer into the perforation lane or land so that the film panels do not fuse to each other and do not fuse to the zipper assembly along the line of weakness during the single stroke.

The product-side regions of the facing portions of the film 102 (e.g., the regions between the zipper profiles 106 and the interior volume 116) remain unperforated during the single sealing stroke. The heated sealing land may form hermetic heat seals between the facing portions of the film 102 and the zipper flanges 126 in areas laterally outside the line(s) of weakness, thereby maintaining a hermetically sealed product compartment prior to consumer opening. As used herein, "hermetic" refers to seals that are substantially gas- and liquid-impermeable under normal storage and handling conditions for the intended product.

Figure 6 illustrates one example of the heat sealing assembly 300 shown in Figure 3. In this example, the teeth 308 are aligned with each other. For example, the teeth 308 outwardly project from the faces 306 of the bodies 302, 304 in diametrically opposed directions. This results in the lines of weakness 118 created by the teeth 308 being equidistant from the top edge 120 of the enclosure 100.

Figure 7 illustrates another example of the heat sealing assembly 300 shown in Figure 3. In this example, the teeth 308 are offset from each other. For example, the teeth 308 outwardly project from the faces 306 of the bodies 302, 304 in opposite directions, but without the teeth 308 being diametrically opposed to each other. During heat sealing, for example, the teeth 308 of one seal body 302 or 304 may be closer to the top edge 120 of the enclosure 100 than the teeth 308 of the other seal body 304 or 302.

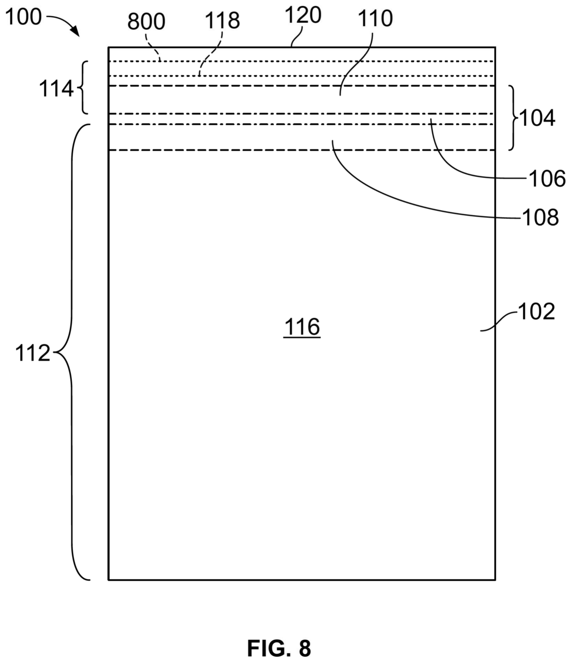

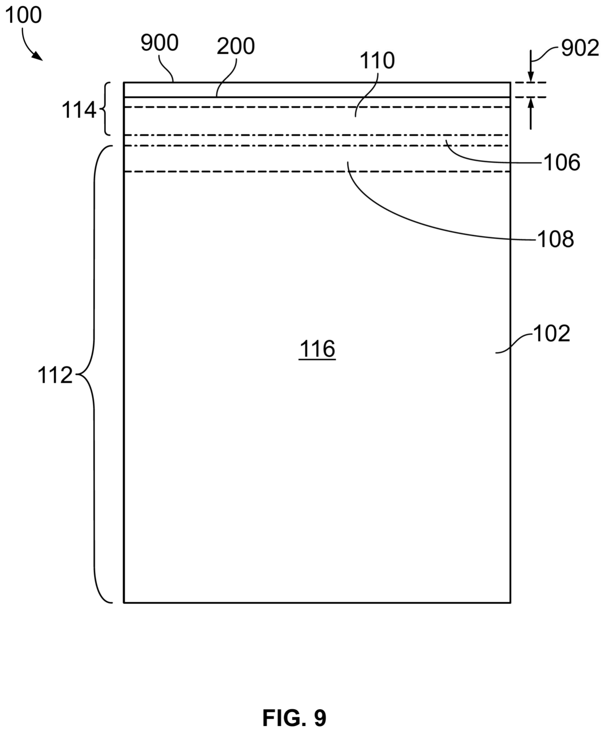

Figures 8 and 9 illustrate another example of the enclosure 100 shown in Figures 1 and 2. Whereas the enclosure 100 shown in Figures 1 and 2 may include the lines of weakness 118 along the front and back of the enclosure 100 being equidistant from the top edge 120, the enclosure 100 shown in Figures 8 and 9 has one line of weakness 118 farther from the top edge 120 than another line of weakness 800. One line of weakness 118 can be created by the teeth 308 projecting from the seal body 304 in Figure 7 while the other line of weakness 800 can be created by the teeth 308 projecting from the seal body 302 in Figure 7. The offset teeth 308 of the bodies 302, 304 create the offset lines of weakness 118, 800 with the lines of weakness 118, 800 being offset in that the lines of weakness 118, 800 are different distances from the zipper profiles 106, the zipper flanges 126, and the top edge 120 of the enclosure 100.

The enclosure 100 shown in Figure 8 is sealed along the top edge 120 while the enclosure 100 shown in Figure 9 has the top portion removed between each line of weakness 118, 800 and the top edge 120 of the enclosure 100. The offset lines of weakness 118, 800 can create open top edges 200, 900 of the enclosure 100 once the top portion of the enclosure 100 is removed along the lines of weakness 118, 800. This creates a height difference 902 between these top edges 200, 900. This can provide the consumer with a location to grasp (e.g., the portion of the enclosure 100 extending above the edge 200 to the edge 900) when opening the zipper assembly 104.

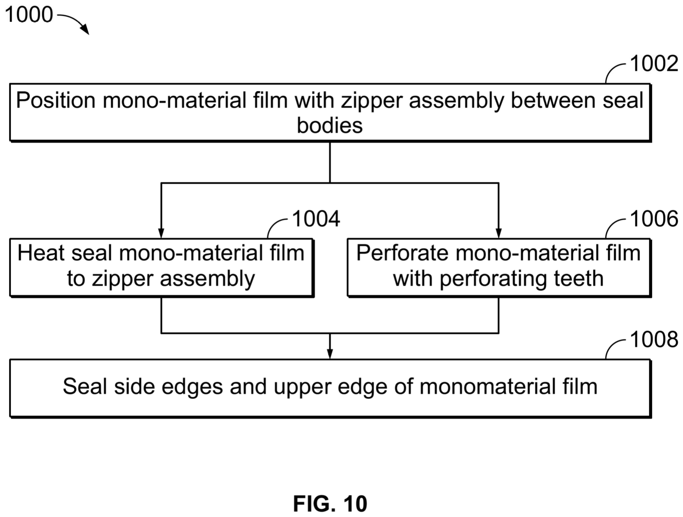

Figure 10 illustrates a flowchart of one example of a method 1000 for heat sealing and simultaneously forming line(s) of weakness in a resealable enclosure. The method 1000 can represent the operations performed by or using the heat seal assembly 300 shown in Figure 3 to seal the zipper assembly 104 to the film 102 while simultaneously cutting into or through the film 102 to form the line(s) of weakness 118 and/or 800. At 1002, a film with a zipper assembly is positioned between seal bodies having perforating teeth. The film may be bent to form two opposing panels or sheets of the film with interior surfaces of the film facing each other. Alternatively, two films may be used with the interior surfaces of the films facing each other. The zipper assembly can be positioned between the facing interior surfaces of the film(s), with the film(s) between the zipper assembly and the seal bodies. The film(s) and the zipper assembly can be aligned such that the facing interior portions or surfaces of the film are in contact with the zipper assembly 104.

At 1004, heat is applied to the film(s) to bond the interior surfaces or facing portions of the film(s) to the flanges of the zipper assembly. The seal bodies can conduct heat to the film and cause the material to melt and fuse with the zipper assembly. This creates a strong, durable seal that ensures the integrity of the resealable enclosure.

During or simultaneous with the heat sealing at 1004, the film(s) are perforated to create the line(s) of weakness at 1006. The perforating teeth can cut into or through the film to create the line(s) of weakness outside of the areas or locations where the seal bodies heat seal the film to the zipper assembly.

In some examples, 1004 and 1006 are performed during a single closing stroke of the opposing seal bodies 302, 304. A heated sealing land on at least one seal body 302 and/or 304 effects (e.g., creates) the heat seals to the zipper assembly while, simultaneously, a thermally insulated perforation land carrying projecting perforating teeth forms the discrete slit perforations only in consumer-side regions of the film panels. The term "consumer-side region" refers to the portion of each film panel situated between the zipper profiles 106 and the top edge 120 of the enclosure 100. The term "product-side region" refers to the portion of each film panel situated between the zipper profiles 106 and the interiorvolume 116. The expression "discrete slit perforations" refers to individual slits separated by intact film ligaments, produced by mechanical penetration of projecting teeth, and not by thermal scoring, in one example.

At 1008, side edges and an upper edge of the film are sealed to form the sealed enclosure. Heat and pressure can be applied by additional heat sealing bodies to the side edges and the upper edge to create a continuous seal around the perimeter of the resealable enclosure. This ensures that the contents of the enclosure are securely contained and protected from external elements. The sealed upper edge can be easily torn off by the consumer along the lines of weakness to provide access to the interior volume of the resealable enclosure.

Certain examples of the inventive subject matter provide a method, comprising positioning facing portions of a mono-material film and a zipper assembly between the facing portions between seal bars having perforating teeth; heat sealing the facing portions of the mono-material film to the zipper assembly therebetween; and during the heat sealing of the facing portions, simultaneously perforating the facing portions of the mono-material film with the perforating teeth of the seal bars; wherein the perforating of the facing portions of the mono-material film cuts into the mono-material film and forms one or more lines of weakness having sequential perforations for a consumer to tear off a top of a resealable enclosure formed by the mono-material film and the zipper assembly.

In at least one example, the zipper assembly includes opposing zipper profiles configured to repeatedly mate and separate to repeatedly seal and open the resealable enclosure, the perforating of the facing portions of the mono-material film cuts into the mono-material film on a consumer side of the zipper profiles.

In at least one example, the perforating of the facing portions of the mono-material film does not cut into the mono-material film on a product side of the zipper profiles.

In at least one example, the heat sealing the facing portions of the mono-material film occurs in areas outside of the one or more lines of weakness formed by the perforating of the facing portions of the mono-material film with the areas thermally insulated from the heat sealing by the seal bars.

In at least one example, the perforating of the facing portions of the mono-material film forms first and second lines of the one or more lines of weakness that are offset from each other to create a height difference in top edges of the facing portions of the mono-material film in the resealable enclosure once consumer portions of the mono-material film above the first and second lines are removed.

In at least one example, the perforating of the facing portions of the mono-material film cuts entirely through at least one of the facing portions of the mono-material film.

In at least one example, the perforating of the facing portions of the mono-material film cuts into, but not entirely through, either of the facing portions of the mono-material film.

Certain examples of the inventive subject matter provide a heat sealing assembly for a resealable enclosure, the heat sealing assembly comprising opposing bodies configured to receive facing portions of a mono-material film and a zipper assembly between the facing portions between the opposing bodies; and perforating teeth projecting from at least one of the opposing bodies; wherein at least part of the opposing bodies is configured to conduct heat and heat seal the facing portions of the mono-material film to the zipper assembly therebetween while the perforating teeth simultaneously perforate the facing portions of the mono-material film to cut into the mono-material film and form one or more lines of weakness having sequential thru-slit perforations for a consumer to tear off a top of a resealable enclosure formed by the mono-material film and the zipper assembly.

In at least one example, the zipper assembly includes opposing zipper profiles configured to repeatedly mate and separate to repeatedly seal and open the resealable enclosure, and the perforating teeth are located on the at least one of the opposing bodies to cut into the mono-material film on a consumer side of the zipper profiles.

In at least one example, the perforating teeth are located on the at least one of the opposing bodies to not cut into the mono-material film on a product side of the zipper profiles.

In at least one example, the opposing bodies include a thermally insulative barrier portion between the perforating teeth and remainders of the opposing bodies, the thermally insulative barrier portion allowing heat sealing of the facing portions of the mono-material film in areas outside of the one or more lines of weakness while preventing the heat sealing of the one or more lines of weakness to the zipper assembly.

In at least one example, the perforating teeth project from both of the opposing bodies.

In at least one example, the perforating teeth project from the opposing bodies along offset patterns such that the perforating teeth form first and second lines of the one or more lines of weakness that are offset from each other.

In at least one example, the perforating teeth project along the offset patterns to create a height difference in top edges of the facing portions of the mono-material film in the resealable enclosure once consumer portions of the mono-material film above the first and second lines are removed.

In at least one example, the perforating teeth project from the opposing bodies to cut entirely through at least one of the facing portions of the mono-material film.

In at least one example, the perforating teeth project from the opposing bodies to cut into, but not entirely through, either of the facing portions of the mono-material film.

Certain examples of the inventive subject matter provide a method, comprising positioning facing portions of a mono-material film and a zipper assembly between the facing portions between seal bars having perforating teeth; heat sealing the facing portions of the mono-material film to the zipper assembly therebetween; and during the heat sealing of the facing portions, simultaneously perforating the facing portions of the mono-material film with the perforating teeth of the seal bars on a consumer side of the zipper assembly; wherein the perforating of the facing portions of the mono-material film cuts into the mono-material film and forms one or more lines of weakness on the consumer side of the zipper for a consumer to tear off a top of a resealable enclosure formed by the mono-material film and the zipper assembly.

In at least one example, the perforating of the facing portions of the mono-material film does not cut into the mono-material film on a product side of the zipper assembly.

In at least one example, the heat sealing the facing portions of the mono-material film occurs in areas outside of the one or more lines of weakness formed by the perforating of the facing portions of the mono-material film with the areas thermally insulated from the heat sealing by the seal bars.

In at least one example, the perforating of the facing portions of the mono-material film forms first and second lines of the one or more lines of weakness that are offset from each other to create a height difference in top edges of the facing portions of the mono-material film in the resealable enclosure once consumer portions of the mono-material film above the first and second lines are removed.

The singular forms "a," "an," and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A method, comprising:
positioning facing portions of a mono-material film (102) and a zipper assembly (104) between the facing portions between opposing seal bodies (302, 304), at least one of the seal bodies (302, 304) included a heated sealing land (510) and a perforation land (512) that is thermally insulated from the heated sealing land (510) and has perforating teeth (308) projecting therefrom;
closing the seal bodies (302, 304) in a single sealing stroke to concurrently apply heat and pressure to the facing portions of the mono-material film (102) and the zipper assembly (104) to thereby heat seal the facing portions of the mono-material film (102) to flanges (126) of the zipper assembly (104) with the heated sealing land (510); and
during the single sealing stroke, simultaneously penetrating consumer-side regions (114) of the facing portions of the mono-material film (102) with the perforating teeth (308) on the perforation land (512) to form at least one line of weakness (118, 800) having discrete slit perforations.

2. The method of claim 1, wherein simultaneously penetrating the consumer-side regions (114) includes penetrating only the consumer-side regions (114) of the facing portions of the mono-material film (102) with the perforating teeth (308) while leaving product-side regions (112) of the facing portions of the mono-material film (102) unperforated.

3. The method of claim 1, wherein thermal insulation of the perforation land (512) from the heated sealing land (510) prevents fusion of the facing portions of the mono-material film (102) to each other or to the zipper assembly (104) along the at least one line of weakness (118, 800) so that the facing portions remain unfused at the at least one line of weakness (118, 800).

4. The method of claim 1, wherein the heated sealing land (510) forms hermetic heat seals between the facing portions of the mono-material film (102) and the zipper assembly (104) only in areas laterally outside the at least one line of weakness (118, 800).

5. The method of claim 1, wherein simultaneously penetrating the consumer-side regions (114) of the facing portions of the mono-material film (102) with the perforating teeth (308) on the perforation land (512) forms the at least one line of weakness (118, 800) as first and second lines of weakness (118, 800) that are offset from each other to create a height difference in upper edges (200, 900) of the facing portions of the mono-material film (102) in the resealable enclosure (100) once consumer portions of the mono-material film (102) above the first and second lines (118, 800) are removed.

6. The method of claim 1, wherein simultaneously penetrating the consumer-side regions (114) of the facing portions of the mono-material film (102) with the perforating teeth (308) on the perforration land (512) cuts entirely through at least one of the facing portions of the mono-material film (102).

7. The method of claim 1, wherein simultaneously penetrating the consumer-side regions (114) of the facing portions of the mono-material film (102) with the perforating teeth (308) on the perforation land (512) cuts into, but not entirely through, either of the facing portions of the mono-material film (102).

8. A heat sealing assembly for a resealable enclosure, the heat sealing assembly comprising:
opposing bodies (302, 304) configured to receive facing portions of a mono-material film (102) and a zipper assembly (104) therebetween, at least one of the opposing seal bodies (302, 304) including a heated sealing land (510) and a perforation land (512) that is thermally insulated from the heated sealing land (510), the heat sealing land (510) having perforating teeth (308) projecting therefrom;
the heated sealing land (510) configured to, upon closure of the seal bodies (302, 304), apply heat and presure to form heat seals joining the facing portions of the mono-material film (102) to flanges (126) of the zipper assembly (104); and
the perforation land (512) configured to, during the closure of the seal bodies (302, 304), simultaneously perforate consumer-side regions of the facing portions of the mono-material film (102) with the perforating teeth (308) to form one or more lines of weakness (118, 800) having discrete perforations on a consumer side of the zipper assembly (104),the perforation land (512) being thermally insulated from the heat sealing land (510) to suppress heat flow into the perforation land (512) and prevent fusion of the facing portions of the mono-material film (102) to each other or to the zipper assembly (104) along the at least one line of weakness (118, 800).

9. The heat sealing assembly of claim 8, wherein the heated sealing land (510) is configured to apply the heat and the presure to form the heat seals as hermetic heat seals joining the facing portions of the mono-material film (102) to flanges (126) of the zipper assembly (104).

10. The heat sealing assembly of claim 8, wherein the perforation land (512) is configured to penetrate only the consumer-side regions of the facing portions of the mono-material film (102) while leaving product-side regions (112) of the facing portions unperforated.

11. The heat sealing assembly of claim 8, wherein the opposing bodies (302, 304) include a thermally insulative barrier portion (500) between the the heated sealing land (510) and the perforation land (512).

12. The heat sealing assembly of claim 8, wherein the perforating teeth (308) project from both of the opposing bodies (302, 304).

13. The heat sealing assembly of claim 12, wherein the perforating teeth (308) project from the opposing bodies (302, 304) along offset patterns such that the perforating teeth (308) form first and second lines of the at least one line of weakness (118, 800) that are offset from each other.

14. The heat sealing assembly of claim 13, wherein the perforating teeth (308) project along the offset patterns to create a height difference in upper edges (200, 900) of the facing portions of the mono-material film (102) in the resealable enclosure (100) once consumer portions of the mono-material film (102) above the first and second lines (118, 800) are removed.

15. The heat sealing assembly of claim 8, wherein the perforating teeth (308) project from the opposing bodies (302, 304) to cut entirely through at least one of the facing portions of the mono-material film (102).
